# EUROPÄISCHE PATENTANMELDUNG

(11) **EP 0 856 692 A1**
(43) Veröffentlichungstag der Anmeldung: **05.08.1998**
(21) Anmeldenummer: 98101125.7
(22) Anmeldetag: 23.01.1998
(51) Int. Cl.: F16K 31/68, G05D 23/02, F24D 19/10

(54) **Vorrichtung zur Verstellung des Stössels eines Ventils**

(30) Priorität: 30.01.1997 DE 19703321
(71) Anmelder: Möhlenhoff, Andreas, 38229 Salzgitter (DE)
(72) Erfinder: Möhlenhoff, Andreas, 38229 Salzgitter (DE)
(74) Vertreter: Döring, Roger, Dipl.-Ing.

(57) **Zusammenfassung**

Es wird eine Vorrichtung zur Verstellung des Stößels (4) eines Ventils angegeben, der durch eine Rückstellfeder beaufschlagt und in seiner Achsrichtung verstellbar ist. Sie besteht aus einem mit dem Ventil fest verbindbaren Gehäuse (7), in dem ein mit einem Arbeitskolben (15) ausgerüsteter, temperaturabhängiger Dehnkörper (12) so angebracht ist, daß die Achsen von Stößel (4) und Arbeitskolben (15) in der gleichen Richtung verlaufen. Der Dehnkörper (12) ist von einem topfartigen, in seiner Achsrichtung verstellbaren Käfig (13) mit einer an seinem offenen Ende rechtwinklig nach außen abstehenden Anlagefläche umgeben. Eine Druckfeder (14) mit gegenüber der Rückstellfeder des Ventils größerer Federkraft umgibt den Käfig (13). Sie ist mit einem Ende an der Anlagefläche des Käfigs (13) und mit dem anderen Ende am Gehäuse (7) abgestützt und durch den Arbeitskolben (15) des Dehnkörpers (12) in axialer Richtung zusammendrückbar. Am Dehnkörper (12) ist ein elektrischer Heizwiderstand angebracht. Der Dehnkörper (12) ist in Montageposition derart exzentrisch zum Stößel (4) desVentils angebracht, daß der denselben umgebende Käfig (13) im Bereich der Anlagefläche mit seiner Stirnfläche an der Stirnfläche des Stößels (4) anliegt.

## Beschreibung

Die Erfindung bezieht sich auf eine Vorrichtung zur Verstellung des Stößels eines Ventils, der durch eine Rückstellfeder beaufschlagt und in seiner Achsrichtung verstellbar ist, bestehend aus einem mit dem Ventil fest verbindbaren Gehäuse, in dem ein mit einem Arbeitskolben ausgerüsteter, temperaturabhängiger Dehnkörper so angebracht ist, daß die Achsen von Stößel und Arbeitskolben in der gleichen Richtung verlaufen, bei welcher der Dehnkörper von einem topfartigen, in seiner Achsrichtung verstellbaren Käfig mit einer an seinem offenen Ende rechtwinklig nach außen abstehenden Anlagefläche umgeben ist, bei welcher eine den Käfig umgebende Druckfeder mit gegenüber der Rückstellfeder des Ventils größerer Federkraft vorhanden ist, die mit einem Ende an der Anlagefläche des Käfigs und mit dem anderen Ende am Gehäuse abgestützt und durch den Arbeitskolben des Dehnkörpers in axialer Richtung zusammendrückbar ist und bei welcher am Dehnkörper ein elektrischer Heizwiderstand angebracht ist (DE 31 40 472 C2).

Eine derartige Anordnung wird beispielsweise in der Heizungs- und Lüftungstechnik eingesetzt. Sie kann grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden.

In der DE 295 19 838 U1 ist eine als Stellantrieb bezeichnete Vorrichtung für eine Auf-Zu-Regulierung eines Ventils beschrieben, die ein mehrteiliges Gehäuse hat. In dem Gehäuse sind ein temperaturabhängiger, durch einen Widerstand beheizbarer Dehnkörper und mit Abstand parallel dazu eine Zugfeder angeordnet. Die Zugfeder ist zwischen einem L-förmigen Druckelement und dem Boden eines Käfigs gespannt. Ihre Federkraft ist größer als die der Rückstellfeder des Ventils. Der Dehnkörper ist am Käfig abgestützt. Sein Arbeitskolben liegt am Druckelement an. Das Druckelement hat einen seitwärts abstehenden, kreisförmigen Ansatz, der in Montageposition in der Verlängerung des Ventilstößels liegt. Der Ventilstößel liegt mit seiner Stirnseite an einer Druckfeder an, deren Federkraft ebenfalls größer als die der Rückstellfeder des Ventils ist. Die Druckfeder ist in einem starren Abschnitt gelagert, in den der Ansatz des Druckelements eingreift. Für die Verstellung des Ventils werden relativ viel Einzelteile benötigt. Das Gehäuse ist nahezu doppelt so hoch wie der Dehnkörper. Es ist außerdem relativ breit, da der Dehnkörper, die Zugfeder und das Druckelement mit Abstand zueinander nebeneinander angeordnet sind.

Bei der Vorrichtung nach der eingangs erwähnten DE 31 40 472 C2 wird der Stößel des Ventils durch elektrischen Strom bewegt. Die Vorrichtung ist dazu mit einem temperaturabhängigen Dehnkörper ausgerüstet, an dem ein elektrischer Heizwiderstand angebracht ist. Ein beispielsweise von einem Thermostat geliefertes Signal bewirkt, daß der Heizwiderstand eingeschaltet wird. Durch die dann erzeugte Wärme wird der Arbeitskolben des Dehnkörpers so verstellt, daß die Druckfeder zusammengedrückt wird. Der Stößel des in Ruhestellung geschlossenen Ventils wird dadurch entlastet und durch die Rückstellfeder in Richtung "Öffnung des Ventils" bewegt. Diese bekannte Vorrichtung hat sich in der Praxis bewährt. Sie hat jedoch relativ viele Einzelteile. Außerdem baut sie relativ hoch, so daß sie störend in einen Raum hineinragen kann.

Der Erfindung liegt die Aufgabe zugrunde, die eingangs geschilderte Vorrichtung so weiterzubilden, daß sie bei kleiner Bauhöhe und einfacher Montage mit wenig Einzelteilen auskommt.

Diese Aufgabe wird gemäß der Erfindung dadurch gelöst, daß der Dehnkörper in Montageposition derart exzentrisch zum Stößel des Ventils angebracht ist, daß der denselben umgebende Käfig im Bereich der Anlagefläche mit seiner Stirnfläche an der Stirnfläche des Stößels anliegt.

Diese Vorrichtung besteht aus nur wenigen Einzelteilen. Sie ist daher einfach zusammenzubauen. Durch die gegenüber dem Stößel des Ventils exzentrische Anbringung des Dehnkörpers bewegen sich der Stößel einerseits und der Arbeitskolben des Dehnkörpers beim Betrieb der Vorrichtung in unterschiedlichen Ebenen, die nebeneinander liegen. Der Verstellweg des Stößels braucht daher für die Bemessung der Bauhöhe des Gehäuses dieser Vorrichtung nicht berücksichtigt zu werden. Die Bauhöhe des Gehäuses kann dadurch insgesamt im wesentlichen auf die axiale Länge des Dehnkörpers selbst beschränkt und damit so klein wie möglich gehalten werden. Im Gehäuse ergibt sich durch die exzentrische, seitliche Position des Dehnkörpers außerdem ein Freiraum, in dem eventuell benötigte elektrische oder elektronische Bauteile untergebracht werden können.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 in schematischer Darstellung eine an einem Ventil angebrachte Vorrichtung nach der Erfindung.
Fig. 2 einen Schnitt durch die Vorrichtung vor ihrer Festlegung an dem Ventil in vergrößerter Darstellung.
Fig. 3 und 4 zwei unterschiedliche Positionen der am Ventil angebrachten Vorrichtung im Schnitt in wieder verkleinerter Darstellung.
Fig. 5 die Vorrichtung nach Fig. 3 in einer um 90° versetzten Schnittebene.

Die Erfindung wird im folgenden für den Einsatz in einer Warmwasserheizungsanlage beschrieben, ohne daß dadurch eine Beschränkung auf dieses Einsatzgebiet erfolgt.

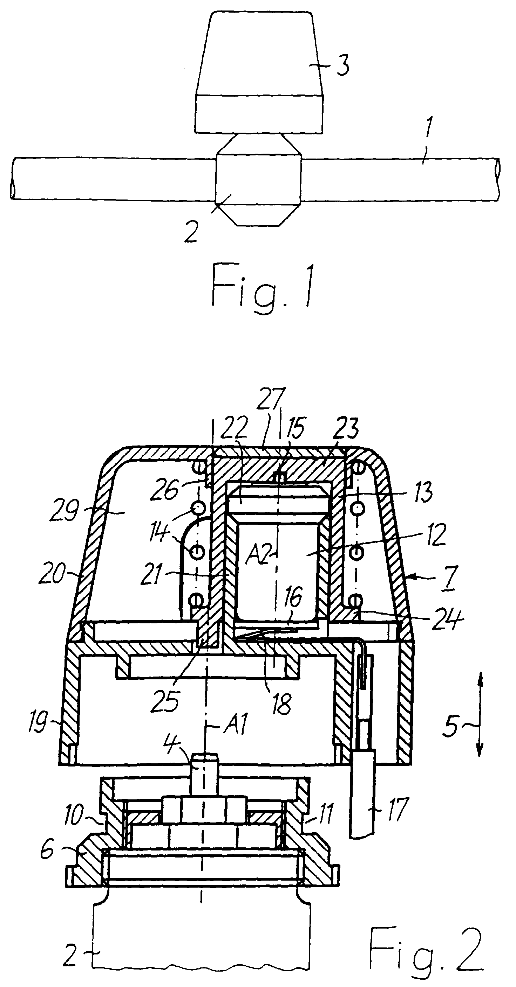

In Fig. 1 ist ein Abschnitt einer Rohrleitung 1 zur Führung von Heizungswasser dargestellt, in deren Verlauf ein Ventil 2 eingebaut ist. Die auf das Ventil 2 aufgesetzte Vorrichtung 3 zur Betätigung des Stößels desselben ist in Fig. 1 nur schematisch wiedergegeben. Der genauere Aufbau der Vorrichtung 3 und ihr Zusammenwirken mit dem Ventil 2 gehen aus den Fig. 2 bis 5 hervor.

Das Ventil 2 hat gemäß Fig. 2 einen Stößel 4, der unter der Wirkung einer der Einfachheit halber nicht mit dargestellten Rückstellfeder steht und in Richtung des Doppelpfeiles 5 verstellbar ist. Das Gehäuse des Ventils 2 ist beispielweise mit einem Gewinde ausgerüstet, auf welches ein Halter 6 aufgeschraubt werden kann. Der beispielweise aus Kunststoff bestehende Halter 6 dient zur Festlegung des Gehäuses 7 der Vorrichtung 3 am Ventil 2. Dazu können im Gehäuse 7 beispielweise zwei federnd einrastende Haken 8 und 9 angebracht sein, die in Montageposition in Ausnehmungen 10 und 11 des Halters 6 eingreifen. Das Gehäuse 7 kann aber auch auf andere Art und Weise am Ventil 2 befestigt werden, beispielsweise mittels einer Überwurfmutter.

Die Vorrichtung 3 selbst besteht - ohne Gehäuse 7 und Halter 6 - aus einem temperaturabhängigen Dehnkörper 12, einem topfartigen Käfig 13 und einer Druckfeder 14. Der Dehnkörper 12 hat einen Arbeitskolben 15. Am Dehnkörper 12 ist außerdem ein elektrischer Heizwiderstand 16 angebracht, der über eine elektrische Leitung 17 und den elektrischen Kontakt 18 an eine Stromquelle anschließbar ist.

Alle Teile der Vorrichtung 3 sind in dem vorzugsweise aus Kunststoff bestehenden Gehäuse 7 angeordnet. Das Gehäuse weist ein Unterteil 19 und ein Oberteil 20 auf, die untereinander verriegelt sind. Am Unterteil 19 ist eine zylindrische, rohrförmige Aufnahme 21 angebracht, in welcher der Dehnkörper 12 angeordnet ist. Er liegt mit einer umlaufenden Erweiterung 22 im Stirnbereich der Aufnahme 21 an deren Wandung an und ist dadurch in Richtung der Kontaktstelle 18 unverrückbar festgelegt .

Der topfförmige Käfig 13 umgibt den Dehnkörper 12 und dessen Aufnahme 21. Er besteht ebenfalls vorzugsweise aus Kunststoff und hat in bevorzugter Ausführungsform einen geschlossenen Boden 23 und eine geschlossene Wandung. Der Käfig 13 ist so positioniert, daß der Arbeitskolben 15 des Dehnkörpers 12 gegen seinen Boden 23 drückt. An seinem offenen Ende hat der Käfig 13 einen rechtwinklig nach außen abstehenden, umlaufenden Flansch 24. An der Stirnseite des Käfigs 13 kann außerdem im Bereich seiner Wandung bzw. des Flansches 24 ein in axialer Richtung abstehender Stift 25 angebracht sein, der in axialer Richtung durch eine entsprechende Öffnung im Gehäuse 7 hindurchragt und durch dieselbe geführt ist. Der umlaufende Flansch 24 ist eine bevorzugte Ausführungsform. Er kann beispielweise auch durch Stege ersetzt sein, die in Umfangsrichtung gegeneinander versetzt rund um den Käfig 13 vorhanden sind und zusammen eine Anlagefläche für die Druckfeder 14 ergeben.

Die Druckfeder 14 umgibt den Käfig 13. Sie ist vorzugsweise als Schraubenfeder ausgebildet. Mit ihrem einen Ende liegt die Druckfeder 15 am Flansch 24 des Käfigs 13 an. Sie ist am anderen Ende am Oberteil 20 des Gehäuses 7 abgestützt.

Das Oberteil 20 des Gehäuses 7 kann an seiner Stirnseite eine Durchbrechung haben, deren lichte Weite den Abmessungen des Käfigs 13 entspricht. Der Käfig 13 ragt in die Durchbrechung hinein, die einen vorzugsweise ringförmigen Ansatz 26 hat, der in das Innere des Gehäuses 7 weist. Der Käfig 13 gleitet bei einer durch den Arbeitskolben 15 des Dehnkörpers 12 einerseits und die Druckfeder 14 andererseits verursachten Bewegung im Ansatz 26 der Durchbrechung. Er kann dabei mehr oder weniger weit aus dem Gehäuse 7 herausragen. Bei seiner Bewegung ist der Käfig 13 durch den Ansatz 26 und die Aufnahme 21 verkantungsfrei geführt. Das gilt auch dann, wenn das Gehäuse 7 keine Durchbrechung hat, sondern geringfügig höher ist. Auch dann kann der Ansatz 26 als Führungselement vorhanden sein. An der Stirnseite des Käfigs 13 kann ein Plättchen 27 angebracht sein, das eine andere Farbe als der Käfig 13 selbst haben kann.

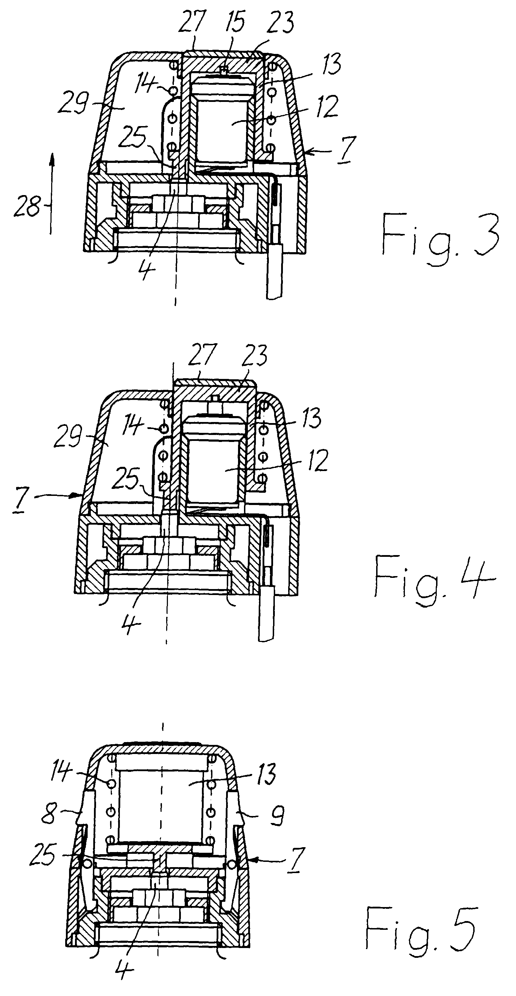

Zur Befestigung der Vorrichtung 3 am Ventil 2 wird zunächst der Halter 6 an demselben befestigt. Danach wird das fertig bestückte Gehäuse 7 mittels der Haken 8 und 9 auf den Halter 6 aufgeschnappt. In Montageposition sind die Achsen A1 des Stößels 4 und A2 des Dehnkörpers 12 seitlich zueinander versetzt. Der Dehnkörper 12 hat also gegenüber dem Stößel 4 den Ventils 2 eine exzentrische Position. In der in den Fig. 3 bis 5 dargestellten Montageposition der Vorrichtung liegt der Stift 25 des Käfigs 13 an der Stirnfläche des Stößels 4 an. Wenn der Käfig 13 ohne Stift 25 ausgeführt ist, dann liegt er mit seiner Stirnseite im Bereich seiner Wandung bzw. des Flansches 24 an der Stirnfläche des Stößels 4 an.

Die Vorrichtung nach der Erfindung arbeitet beispielsweise wie folgt:

Nach Festlegung der Vorrichtung 3 am Ventil 2 ergibt sich eine aus Fig. 3 ersichtliche Anordnung. Bei dieser Anordnung ist das Ventil 2 geschlossen. Wenn das Ventil 2 geöffnet werden soll, wird der Stromkreis des Heizwiderstandes 24 geschlossen. Der Heizwiderstand 24 wird dann erwärmt. Die damit verbundene Erwärmung des Dehnkörpers 12 führt zu einer Bewegung des Arbeitskolbens 15, und zwar in Richtung des Pfeiles 28.

Der Arbeitskolben 15 nimmt den Käfig 13 mit, wodurch die Druckfeder 14 zusammengedrückt wird. Dadurch wird der Stößel 4 des Ventils 2 entlastet, der unter der Wirkung seiner Rückstellfeder in Richtung des Pfeiles 28 bewegt wird. Das Ventil 2 wird dadurch geöffnet, so daß Heizungswasser durch die Rohrleitung 1 fließen kann. Eine mögliche Endposition des Käfigs 13 und damit auch des Stößels 4 geht beispielweise aus Fig. 4 hervor.

In den Fig. 3 und 4 ist deutlich zu erkennen, daß die Bewegung des Stößels 4 unabhängig vom Dehnkörper 12 ist. Der Stößel 4 wird gemäß Fig. 4 vielmehr am Dehnkörper 12 seitlich vorbeigeführt. Die Höhe des Oberteils 20 des Gehäuses 7 entspricht daher i. w. der axialen Länge des Dehnkörpers 12.

Durch die mehr seitliche Anordnung des Dehnkörpers 12 im Gehäuse 7 entsteht in demselben ein Freiraum 29, wenn es etwa symmetrisch zur Achse A1 des Stößels 4 aufgebaut wird. Das Gehäuse 7 kann dann eine etwa ovale Form haben. Im Freiraum 29 können für eventuelle Steuer- und Regelzwecke benötigte elektrische und elektronische Bauteile angeordnet werden. Alle im Freiraum 29 angeordneten Teile und auch die Kontaktstelle 18 können mit Vorteil feuchtigkeitsdicht und insbesondere gegen Spritzwasser geschützt im Gehäuse 7 untergebracht werden.

Der Käfig 13 wird bei einer durch den Arbeitskolben 15 bedingten Bewegung aus dem Gehäuse 7 herausgedrückt. Das kann mit Vorteil zur einfachen Überprüfung der Funktionsfähigkeit der Vorrichtung 3 ausgenutzt werden. Die Vorrichtung 3 arbeitet dann, wenn bei eingeschaltetem Heizwiderstand 24 ein Teil des Käfigs 13 aus dem Oberteil 20 des Gehäuses 7 herausragt, so wie es in Fig. 5 dargestellt ist.

Die Sichtbarkeit des Käfigs 13 von außen ist bereits bei der Montage der Vorrichtung 3 von Vorteil. Dazu kann beispielweise das gegenüber dem Käfig 13 anders gefärbte Plättchen 27 ausgenutzt werden. Es schließt beispielweise gemäß Fig. 2 bei noch nicht montierter Vorrichtung 3 etwa mit der Oberkante des Oberteils 20 des Gehäuses 7 ab. Entsprechend der Darstellung in Fig. 3 ragt das Plättchen 27 geringfügig über die Oberkante des Gehäuses 7 hinaus, wenn die Vorrichtung 3 richtig montiert ist. Diese Möglichkeit besteht auch dann, wenn im Bereich der Stirnseite des Käfigs 13 eine Markierung angebracht wird. Auf das Plättchen 27 kann dann verzichtet werden. Die richtige Position des Käfigs 13 im Gehäuse 7 nach Montage der Vorrichtung 3 ist eine Gewähr dafür, daß der Stift 25 am Stößel 4 anliegt, so daß das Ventil 2 geschlossen ist.

## Patentansprüche

1. Vorrichtung zur Verstellung des Stößels eines Ventils, der durch eine Rückstellfeder beaufschlagt und in seiner Achsrichtung verstellbar ist, bestehend aus einem mit dem Ventil fest verbindbaren Gehäuse, in dem ein mit einem Arbeitskolben ausgerüsteter, temperaturabhängiger Dehnkörper so angebracht ist, daß die Achsen von Stößel und Arbeitskolben in der gleichen Richtung verlaufen, bei welcher der Dehnkörper von einem topfartigen, in seinerAchsrichtung verstellbaren Käfig mit einer an seinem offenen Ende rechtwinklig nach außen abstehenden Anlagefläche umgeben ist, bei welcher eine den Käfig umgebende Druckfeder mit gegenüber der Rückstellfeder des Ventils größerer Federkraft vorhanden ist, die mit einem Ende an der Anlagefläche des Käfigs und mit dem anderen Ende am Gehäuse abgestützt und durch den Arbeitskolben des Dehnkörpers in axialer Richtung zusammendrückbar ist und bei welcher am Dehnkörper ein elektrischer Heizwiderstand angebracht ist, dadurch gekennzeichnet, daß der Dehnkörper (12) in Montageposition derart exzentrisch zum Stößel (4) desVentils (2) angebracht ist, daß der denselben umgebende Käfig (13) im Bereich der Anlagefläche mit seiner Stirnfläche an der Stirnfläche des Stößels (4) anliegt.

2. Vorrichtung nach Anspruch 1, dadurch gekennzeichnet, daß der Dehnkörper (12) in einer rohrförmigen, zylindrischen Aufnahme (21) angeordnet und abgestützt ist.

3. Vorrichtung nach Anspruch 1 oder 2, dadurch gekennzeichnet, daß der Käfig (13) als Topf mit geschlossener Wandung und geschlossenem Boden (23) ausgebildet ist.

4. Vorrichtung nach einem der Ansprüche 1 bis 3, dadurch gekennzeichnet, daß die Anlagefläche des Käfigs (13) als umlaufender Flansch (24) ausgebildet ist.

5. Vorrichtung nach einem der Ansprüche 1 bis 4, dadurch gekennzeichnet, daß an der Stirnfläche des Käfigs (13) ein axial abstehender Stift (25) angebracht ist, der in Montageposition an der Stirnfläche des Stößels (4) anliegt.

6. Vorrichtung nach einem der Ansprüche 1 bis 5, dadurch gekennzeichnet, daß im Gehäuse (7) der Vorrichtung (3) eine Durchbrechung zum Durchtritt des Käfigs (13) angebracht ist.

7. Vorrichtung nach einem der Ansprüche 1 bis 6, dadurch gekennzeichnet, daß der Käfig (13) zur verkantungsfreien Führung außen an der Aufnahme (21) des Dehnkörpers (12) anliegt.

8. Vorrichtung nach einem der Ansprüche 1 bis 7, dadurch gekennzeichnet, daß im Gehäuse (7) federnd einrastende Haken (8,9) angebracht sind, durch welche das Gehäuse (7) auf einen am Ventil (2) angebrachten Halter (6) aufschnappbar ist, der mit Ausnehmungen (11,12) versehen ist, in welche die Haken (8,9) in Montageposition eingreifen.
